(19) European Patent Office — Europäisches Patentamt — Office européen des brevets

(11) **EP 1 076 284 A1**

(12) **EUROPEAN PATENT APPLICATION**

(43) Date of publication:
**14.02.2001 Bulletin 2001/07**

(51) Int. Cl.[7]: **G06F 7/72**

(21) Application number: **00117427.5**

(22) Date of filing: **11.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.08.1999 CA 2280271**

(71) Applicant: **Certicom Corp.
Mississauga, Ontario L4W 5L1 (CA)**

(72) Inventor: **Lambert, Robert J.
Cambridge, Ontario N3C 3N3 (CA)**

(74) Representative:
**Flaccus, Rolf-Dieter, Dr.
Patentanwalt
Bussardweg 10
50389 Wesseling (DE)**

(54) **Method and apparatus for implementing arithmetical operations in finite fields**

(57) Finite field mathematic processes are performed by representing field elements of a group $\mathbf{F}_p{}^m$ as linear combinations of $x^0, x^{1\Delta}, x^{2\Delta}, \ldots x^{(n-1)\Delta}$. $\Delta$ is a factor of the unit group order such that $n = (p^m-1)/\Delta \geq m$.

Efficient multiplication and squaring may be performed in this representation.

EP 1 076 284 A1

**Description**

To represent finite fields, a polynomial basis, or a normal basis is typically used. A polynomial basis for $m$-th degree extension over the base field $\mathbf{F}_p$ consists of elements $x^0, x^1, x^2, ... x^{(m-1)}$. A normal basis for $m$-th degree extension over the base field $\mathbf{F}_p$ consists of elements

$$x^{p^0}, x^{p^1}, x^{p^2}, x^{p^3}, ... x^{p^{(m-1)}}.$$

Typically for cryptographic applications when extension fields are used, the base field is $\mathbf{F}_2$. The element of such a finite field is represented by a sequence of bits, which are the coefficients of the basis elements that comprise the element. Adding (or subtracting) is easily implemented by bitwise exclusive or (XOR). For other field operations the basis affects the efficiency of the operation.

In the polynomial basis multiplication is effected by the XOR convolution of the operands. A representation of double bit length results requires reduction with the irreducible polynomial chosen to represent the field. The irreducible polynomial can be chosen so as to reduce the amount of work involved in this reduction. Typically the weight of the irreducible is minimized, and coefficients positioned to best suit the underlying computer implementation. For a random irreducible, the amount of bit operations required to effect the reduction is the same as the amount in the original convolution operation. However, with carefully chosen irreducibles this work can be reduced. This sort of reduction (by specific types or irreducibles) works well with software and general purpose CPU's. However, in hardware that must support many irreducibles, the irregular nature of this special irreducible reduction is unattractive.

Squaring in a polynomial basis consists of interleaving zeros into the representation (since all double products will vanish) and subsequent reduction. Since the double length square is so easily calculated, the reduction even by special irreducibles will be a significant component of the squaring operation.

Inversion in polynomial basis is implemented with the extended Euclidean algorithm (EEA), requiring at least the time for two multiplications.

A normal basis representation has the advantage then that squaring can be effected by rotating the bit representation. For multiplication in a normal basis, one operand can be rotated $m$ times, and the product built up by combining $T$ bits of the rotated operand for each bit of the product. In certain extensions, optimal normal basis (ONB) representations exist, where the number of components required for each bit is two. It is expected that twice as much effort is required to effect this multiplication as in a polynomial basis with carefully chosen irreducible. In software implementations, the non-regularity of the components which contribute to each bit of the product is a disadvantage.

To invert a normal basis representation, inversion by exponentiation or conversion to polynomial basis and the extended Euclidean algorithm can be applied (requiring conversion back). Both of these options are rather expensive. Requires expansion and reduction.

A normal basis has very effective squaring, multiplication that is about twice the difficulty of a well-chosen polynomial basis. Inversion is quite slow and can be made either by exponentiation, or by conversion to a polynomial basis and back, where the Euclidean algorithm can be used.

It is therefore an object of the invention to find a representation that is efficient for the arithmetic operations including addition, multiplication, and inversion.

In general terms, the present invention represents field elements of a group $\mathbf{F}_p{}^m$ as linear combinations of $\{x^0, x^{1\Delta}, x^{2\Delta}, ... x^{(n-1)\Delta}\}$ where $\Delta$ is a factor of the unit group order of $\mathbf{F}_p{}^m$ such that $n = (p^m - 1)/\Delta \geq m$ .

In this representation, the multiplication of two elements a, b where

$$a = \sum_{i=0}^{\Delta-1} a_i x^{i\Delta} \text{ and}$$

$$b = \sum_{i=10}^{\Delta-1} b_i x^{i\Delta}$$

can be computed by adding together the cycle shifts of b as a scalar multiplied by the components of a. Reduction is not required.

Preferably the factor $\Delta$ is selected to be as small as possible but not smaller than $m$.

An embodiment of the invention will now be described by way of example only with reference to the accompanying drawings in which:-

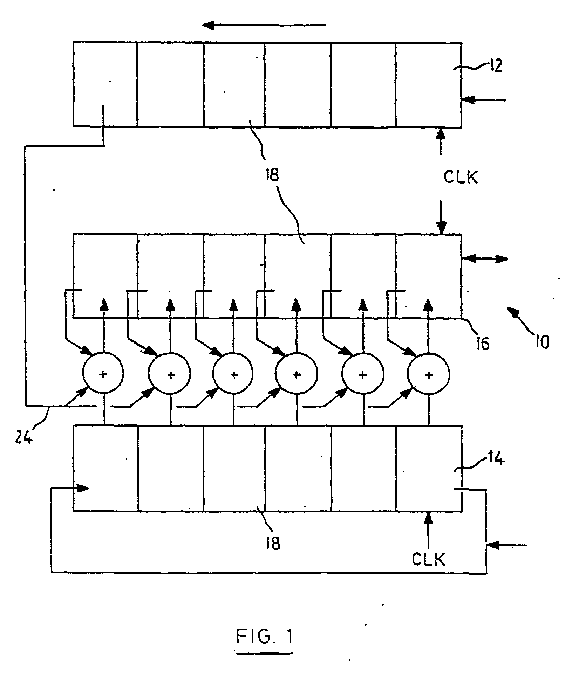

Figure 1 is a schematic representation of a finite field multiplier.

The embodiment will be exemplified using fields of characteristic 2, i.e. the field $\mathbf{F}_2{}^m$ although it is understood that in general fields of characteristic q may be used. The size or unit group order, of the group of units of a finite field are less than the number of elements so that $\mathbf{F}_2{}^m$ has $2^m$-1 units. Moreover, all members of the multiplicative group of a finite field, when raised to the unit group order yield identity, i.e. if e is an element of the group then

$$e^{2^{m-1}} = 1.$$

For a given field $\mathbf{F}_2{}^m$ a factor, $\Delta$, of the unit group order $2^m$-1 is selected such that n = $(2^m$-1)/$\Delta \geq m$ . Each of the field elements can then be represented as linear combinations of vectors $\{x^0, x^{1\Delta}, x^{2\Delta}...x^{(n-1)\Delta}\}$ so that element

$$a = \sum_{i=0}^{n-1} a_i x^{i\Delta} \text{ and}$$

$$b = \sum_{i=0}^{n-1} b_i x^{i\Delta}.$$

The product axb can be computed as:-

$$a \, x \, b = a_0 \times (b_0 x^0 + b_1 x^{1\Delta} + ... + b_{n-1} x^{(n-1)\Delta}) +$$

$$a_1 \times (b_0 x^{1\Delta} + b_1 x^{2\Delta} + ... + b_{n-1} x^{n\Delta}) +$$

$$a_2 \times (b_0 x^{2\Delta} + b_1 x^{3\Delta} + ... + b_{n-1} x^{(n+1)\Delta}) +$$

$$\vdots$$

$$a_{n-1} \times (b_0 x^{(n-1)\Delta} + b_1 x^{(n)\Delta} + ... + b_{n-1} x^{2(n-1)\Delta})$$

Using the relationship

$$x^{2^M} - 1 = n\Delta = x^0,$$

that this simplifies to

$$a \, x \, b = a_0 \times (b_0 x^0 + b_1 x^{1\Delta} + ... + b_{n-1} x^{(n-1)\Delta}) +$$

$$a_1 \times (b_0 x^{1\Delta} + b_1 x^{2\Delta} + ... + b_{n-1} x^{0\Delta}) +$$

$$a_2 \times (b_0 x^{2\Delta} + b_1 x^{3\Delta} + ... + b_{n-1} x^{1\Delta}) +$$

$$\vdots$$

$$a_{n-1} \times (b_0 x^{(n-1)\Delta} + b_1 x^0 + ... + b_{n-1} x^{(n-2)\Delta})$$

The simplification permits a multiplier as shown in Figure 1 to be implemented.

Referring therefore to Figure 1, a multiplier 10 includes a pair of shift registers 12, 14 and an accumulating register 16. Each of the registers 12,14,16 has cells 18 that contain a coefficient of the vector $x^{i\Delta}$. The register 14 is a cyclic shift register so that the coefficients are cycled through the cells. The register 12 may also be a cyclic shift register where the contents are to be preserved or may typically be a FIFO.

Each of the cells 18 of the register 14 is connected to an XOR gate 20 interposed between the respective cells of the registers 14, 16.

In a field of characteristic 2, the an XOR gate implements the addition of two coefficients designated by the "+" symbol...

The gate 20 also receives an input from the corresponding cell 18 of the register 16 and provides an output 22 to the same cell 18. The operation of the gates 20 is controlled by a signal 24 applied to each of the gates. The signal 24 is obtained from the coefficient in the first cell 18 of the register 12. The contents of the cells 12, 14, 16 may be loaded and retrieved by way of lines 26, 28, 30 respectively and clock signals are applied by way of clock lines 32,34,36.

The coefficients of element a and b are then loaded in the registers 12,14 respectively so that coefficients $a_o$ and $b_o$ are aligned. The register 16 is empty.

The contents of the cells 18 of registers 14 and 16 are applied to respective gates 18 and the control signal 24 applied. Assuming the coefficient in the lead cell 18 of register 12 is enabling, then the gates will XOR the contents of the register 14 and 16. The content of register 16 will then be the coefficients of b, and represent the product $a_o(b_0x^\circ + b_1x^{1\Delta}...b_{n-1}x^{(n-1)\Delta})$.

The register 14 is then cycled one cell and the register 12 shifted.

The register 14 then contains the representation $b_{n-1}x^\circ + b_0x^{1\Delta}...b_{n-2}x^{(n-1)\Delta}$ and the coefficient $a_1$ in the register 12 is the control signal 24. The XOR function will produce $a_0 \times (b_0x^0 + b_1x^{1\Delta}+...+b_{n-1}x^{(n-1)\Delta}) + a_1 \times (b_0x^{1\Delta} + b_1x^{2\Delta}+...+b_{n-1}x^{0\Delta})$ which is stored in the register 16. If $a_1$ is enabling then the XOR operates to store a new value in the register 16 after operation, or if $a_1$ is not enabling, the register 14 is cycled and the register 12 shifted. This process repeats until a full cycle is completed at which time register 16 will contain the coefficients of the product a x b. The contents can then be downloaded via line 30 for subsequent use.

It will be seen therefore that multiplication may be achieved with n-1 shifts of the registers 12, 14. The connections between the cells is simple and is maintained for different lengths of representation.

Squaring can be obtained by repeated multiplications in which case a cyclic shift register is used for the register 12.

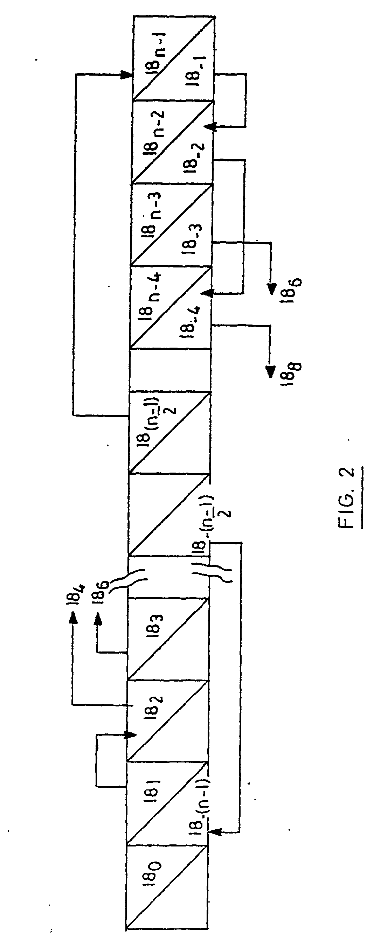

Alternatively, for squaring an implementation may be used as shown in Figure 2.

In $\mathbf{F}_2m$ squaring

$$a = \sum_{i=0}^{n-1} a_1 x^{(i\Delta)}$$

yields

$$a^2 = \sum_{i=0}^{n-1} a_i x^{(2i\Delta)},$$

since all terms involving $a_l$ and $a_j$, $i \neq j$ occur twice (zero in $\mathbf{F}_2m$) and

$$a_i^2 = a_i$$

in $\mathbf{F}_2$. Squaring in a cyclic basis can then be performed by expansion ($x^{(1\Delta)}$ going to $x^{(2i\Delta)}$) and reduction.

However, since the exponents of a cyclic basis are defined only modulo $2^m - 1$, coefficients of $x$ can be interpreted as negative modulo $2^m - 1$, e.g.

$$a = a_o x^0 + a_1 x^{1\Delta}+...+a_{n-2}x^{(n-2)\Delta}+a_{n-1}x^{(n-1)\Delta}$$
$$= a_0 x^0 + a_1 x^{1\Delta}+...+a_{n-2}x^{-2\Delta}+a_{n-1}x^{-1\Delta}.$$

Now, $a$ can be interpreted as a sum of positive and negative powers of $x^\Delta$. If $n$ is odd, and we desire to have exponents of least magnitude, then $a$ can be presented as an equal number of positive and negative exponents plus the zero exponent:

$$a = a_o x^0 + a_1 x^{1\Delta}+a_2 x^{2\Delta}+...+a_{(n-1)/2}x^{(n-1)/2\Delta}+ a_{(n+1)/2}x^{-(n-2)/2\Delta}+...+a_{n-2}x^{-2\Delta}+a_{n-1}x^{-1\Delta}.$$

When $n$ is even, there will be a middle term that can be assigned to be either positive or negative with equal magnitude:

$$a = a_o x^o + a_1 x^{1\Delta} + a_2 x^{2\Delta} + ... + a_{(n-2)/2} x^{(n-2)/2]\Delta} + a_{n/2} x^{(n/2)\Delta} + a_{(n+2)/2} x^{-(n-2)/2\Delta} + ... + a_{n-2} x^{-2\Delta} + a_{n-1} x^{-1\Delta},$$

where $a_{n/2} x^{(n/2)\Delta}$ could equivalently be written as $a_{n/2} x^{-(n/2)\Delta}$.

Now squaring can be effected by acting on the positive and negative exponents separately and combining the result:

$$a^2 = a_o x^o + a_1 x^{2\Delta} + a_2 x^{4\Delta} + ... + a_{n-2} x^{-4\Delta} + a_{n-1} x^{-2\Delta}.$$

The largest exponent that can result from this expansion is $x^{\pm n\Delta}$ in the case $n$ is even.

Therefore squaring can be accomplished efficiently by combining two expansions, one for positive and one for negative exponents, and no reduction is required thereafter.

This may be implemented in hardware as shown in Figure 2.

A register 40 includes cells 18 designated 0, $18_1$; $18_2$; $18_3$...$18_{n-1}$. These same cells may also be designated in reverse order $18_{-1}$, $18_{-2}$...$18_{-(n-1)}$

The cells 18 are interconnected to exchange contents and provide the coefficients of the square.

For $n$ odd, which will occur in most if not all cases, the contents of cell $18_0$ are not moved. The cell $18_1$ is connected to $18_2$; the cell $18_2$ to $18_4$; $18_3$ to $18_6$ up to $18_{(n-1)/2}$ which is connected to $18_{(n-1)}$. For the upper (n-1)/2 cells the connections are made in reverse so that, using the alternative rotation, $18_{-1}$ is connected to $18_{-2}$; $18_{-2}$ to $18_{-4}$ down to $18_{-(n-1)/2}$ which is connected to $18_{-(n-1)}$.

The contents of the cells 18 are thus interleaved and represent the square of the element.

If $n$ is even, the expansion is similar. Each even cell receives the contents from a cell in the lower range and in the upper range which are added together. The mid term is added to the '0' cell.

Inversion is also readily accomplished using known polynomial base algorithms and substituting $X = x^\Delta$ into the algorithm. Thus the extended Euclidian algorithm or an equivalent may be used.

**Claims**

1. A method of representing field elements of a group $\mathbf{F}_p^m$ as linear combinations of $\{x^0, x^{1\Delta}, x^{2\Delta}, ... x^{(n-1)\Delta}\}$ where $\Delta$ is a factor of the unit group order of $\mathbf{F}_p^m$ such that $n = (p^m - 1)/\Delta \geq m$.

FIG. 1

EP 1 076 284 A1

FIG. 2

**European Patent Office**

# EUROPEAN SEARCH REPORT

Application Number

EP 00 11 7427

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ANWARUL HASAN M ET AL: "MODULAR CONSTRUCTION OF LOW COMPLEXITY PARALLEL MULTIPLIERS FOR A CLASS OF FINITE FIELDS GF(2M)" IEEE TRANSACTIONS ON COMPUTERS,US,IEEE INC. NEW YORK, vol. 41, no. 8, 1 August 1992 (1992-08-01), pages 962-971, XP000298590 ISSN: 0018-9340 * page 963, left-hand column, last line – right-hand column; figure 5 * | 1 | G06F7/72 |
| X,P | HUAPENG WU ET AL: "Highly regular architectures for finite field computation using redundant basis" PROCEEDINGS (LECTURE NOTES IN COMPUTER SCIENCE VOLUME 1717), CRYPTOGRAPHIC HARDWARE AND EMBEDDED SYSTEMS. FIRST INTERNATIONAL WORKSHOP, CHES'99, WORCESTER, MA, USA, 1, pages 269-279, XP000964777 1999, Berlin, Germany, Springer-Verlag, Germany ISBN: 3-540-66646-X * the whole document * | 1 | |

TECHNICAL FIELDS SEARCHED (Int.Cl.7)

G06F

The present search report has been drawn up for all claims

| Place of search | Date of completion of the search | Examiner |
|---|---|---|
| THE HAGUE | 17 November 2000 | Verhoof, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)